(19) Europäisches Patentamt
European Patent Office
Office européen des brevets

(11) EP 3 032 462 B1

(12) EUROPEAN PATENT SPECIFICATION

(45) Date of publication and mention
of the grant of the patent:
26.02.2020 Bulletin 2020/09

(51) Int Cl.:
G06K 9/00 (2006.01)          G06K 9/62 (2006.01)
G06K 9/34 (2006.01)

(21) Application number: 15198517.3

(22) Date of filing: 08.12.2015

(54) **METHOD AND APPARATUS FOR TRACKING OBJECT, AND NON-TRANSITORY COMPUTER-READABLE RECORDING MEDIUM**

VERFAHREN UND VORRICHTUNG ZUR OBJEKTVERFOLGUNG UND ÜBERGANGSLOSES COMPUTERLESBARES AUFZEICHNUNGSMEDIUM

PROCÉDÉ ET APPAREIL DE SUIVI D'OBJET ET SUPPORT D'ENREGISTREMENT LISIBLE PAR ORDINATEUR NON TRANSITOIRE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 09.12.2014 CN 201410749493

(43) Date of publication of application:
15.06.2016 Bulletin 2016/24

(73) Proprietor: Ricoh Company, Ltd.
Tokyo 143-8555 (JP)

(72) Inventors:
• YOU, Ganmei
Beijing 100044 (CN)
• LIU, Dianchao
Beijing 100044 (CN)
• YANG, Tianyu
Beijing 100044 (CN)
• LU, Yaojie
Beijing 100044 (CN)
• SHI, Zhongchao
Beijing 100044 (CN)

(74) Representative: White, Duncan Rohan
Marks & Clerk LLP
Fletcher House (2nd Floor)
Heatley Road
The Oxford Science Park
Oxford OX4 4GE (GB)

(56) References cited:
• KELLY P ET AL: "Robust pedestrian detection and tracking in crowded scenes", IMAGE AND VISION COMPUTING, ELSEVIER, GUILDFORD, GB, vol. 27, no. 10, 2 September 2009 (2009-09-02), pages 1445-1458, XP026171151, ISSN: 0262-8856, DOI: 10.1016/J.IMAVIS.2008.04.006 [retrieved on 2008-04-22]
• PHILIP KELLY ET AL: "Pedestrian detection in uncontrolled environments using stereo and biometric information", PROCEEDINGS OF THE 4TH ACM INTERNATIONAL WORKSHOP ON VIDEO SURVEILLANCE AND SENSOR NETWORKS , VSSN '06, vol. 169, 27 October 2006 (2006-10-27), page 161, XP055204618, New York, New York, USA DOI: 10.1145/1178782.1178807 ISBN: 978-1-59-593496-3

**Description**

**1. Field of the Invention**

The present invention generally relates to image processing, and in particular, relates to a method and an apparatus for tracking an object.

**2. Description of the Related Art**

The technology for tracking an object is widely used in many fields such as object location, video monitoring, robot navigation, driver assistance, driver warning and the like. Currently, there are still problems in some cases in the object tracking technology. For example, an tracked object is incorrectly recognized as a newly appearing object or another object, or an tracked object is lost. Particularly, in a case where a pedestrian is tracked, the above problem becomes more serious, because a posture of the pedestrian constantly changes or shielding often occurs when there are many pedestrians.

US-A-2012/0194680 discloses technology for detecting pedestrians by performing matching between a detected image and pre-stored templates for outlines of the pedestrians. In such an application, the whole of the outlines of the pedestrians are set as the templates, thus the effect is unsatisfactory in a case where the tracked pedestrian is shielded.

US-A-7418112 discloses technology for detecting a pedestrian by performing matching between a head region of the pedestrian and a pre-stored head model when the whole of a pedestrian region cannot be recognized. Such technology detects the pedestrian using a whole-body and a head, thus the technology cannot be applied to a case where the whole-body and the head are not clear but other parts are clear.

There is disclosed in Kelly P et al: "Robust Pedestrian Detection and Tracking in Crowded Scenes", IMAGE AND COMPUTING, vol. 27, no. 10, 2 September 2009, pages 1445-1458, a method of detecting and tracking pedestrians in unconstrained crowded scenes. Detection is performed by a 3D clustering process within a region-growing framework. Hard thresholds in the clustering process are avoided by using bio-metrically inspired constraints and a number of plan-view statistics. Tracking is achieved by formulating a tracking matching process as a weighted bipartite graph and using a *Weighted Maximum Cardinality Matching* scheme.

**SUMMARY**

The invention provides a method in accordance with claim 1 and an apparatus in accordance with claim 9.

According to the technology for tracking the object according to the embodiments of the present invention, an accurate tracking result can be obtained, even when a posture of the object frequently changes or the object is partially shielded.

**BRIEF DESCRIPTION OF THE DRAWINGS**

FIG. 1 is a schematic drawing illustrating an exemplary scene of technology for tracking an object according to embodiments of the present invention;

FIG. 2 is a flowchart illustrating an object tracking method according to a first embodiment of the present invention;

FIGs. 3A and 3B are schematic drawings illustrating a grayscale image and a disparity map of a current frame which include the object, respectively;

FIG. 4 is a schematic drawing illustrating an exemplary result of clustering for the object in the disparity map of the current frame shown in FIG. 3B;

FIG. 5 is a schematic drawing illustrating an exemplary result of division of body parts for the object in the disparity map of the current frame shown in FIG. 3B;

FIG. 6 is a schematic drawing illustrating a plurality of clusters formed by performing clustering for disparity points in a disparity map of a next frame;

FIG. 7 is a flowchart illustrating processing of calculating similarity between the cluster in the disparity map of the next frame and a conspicuous portion in the current frame to determine whether the cluster is similar to the conspicuous portion according to an embodiment of the present invention;

FIG. 8 is a schematic drawing illustrating a process of sliding of the conspicuous portion in the current frame on the cluster in the next frame;

FIG. 9 is a schematic drawing illustrating an exemplary classification result after classifying candidate clusters;

FIG. 10 is a flowchart illustrating processing of determining conspicuity of the conspicuous portions of the object in the disparity map of the current frame according to an embodiment of the present invention;

FIG. 11 is a block diagram illustrating a functional configuration of an object tracking apparatus according to an embodiment of the present invention; and

FIG. 12 is a schematic drawing illustrating the overall hardware configuration of an object tracking system according to an embodiment of the present invention.

## DETAILED DESCRIPTION

In the following, embodiments of the present invention are described in detail with reference to the accompanying drawings, so as to facilitate the understanding of the present invention.

First, technical terms mentioned in the description will be introduced briefly.

It is well known that, the grayscale image is an image that has only one sampling color, is usually displayed in grayscales from a darkest black to a brightest white, and has a plurality of grayscale levels for displaying from black to white. The grayscale image is usually stored in a non-linear measure of 8 bits for each sampling pixel, accordingly the grayscale image may have 256 grayscale levels. In a color image, each pixel is usually represented by three components, e.g., red (R), green (G) and blue (B), and the component is within (0,255). The photographing method and the function of the grayscale image and the color image are similar (both of them are used to represent color information), thus the grayscale image and the color image are usually not particularly distinguished in the art. Even though a grayscale image is used in the following description of embodiments, the grayscale image may be replaced by a color image.

The disparity map is an image whose reference image is one of a left image and a right image, a size is the size of the reference image, and a value of each point (pixel) is disparity of a corresponding point in the reference image. The disparity map may be obtained based on the left and right images using a well-known stereo matching method in the art, and the description is omitted here.

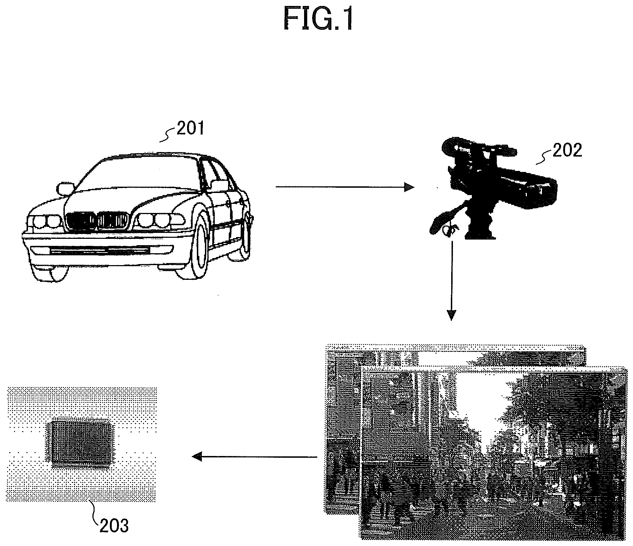

FIG. 1 is a schematic drawing illustrating an exemplary scene of technology for tracking an object according to embodiments of the present invention. As shown in FIG. 1, a user is in a car 201 equipped with a stereo camera 202, and the stereo camera 202 tracks and photographs pedestrians walking on a road to obtain left images and right images of a plurality of continuous frames. A processing apparatus 203 such as a computing chip obtains disparity maps of a plurality of continuous frames by performing calculation based on the left images and the right images of the continuous frames photographed by the stereo camera 202, and detects and tracks the photographed pedestrians using the disparity maps. It should be noted that, Fig. 1 is just an exemplary application scene, and the technology for tracking the object according to the embodiments of the present invention may also be applied to other scenes, such as detection and tracking of a vehicle or the like. For convenience of explanation and understanding, tracked objects that will be described below may be pedestrians on a road.

<First Embodiment

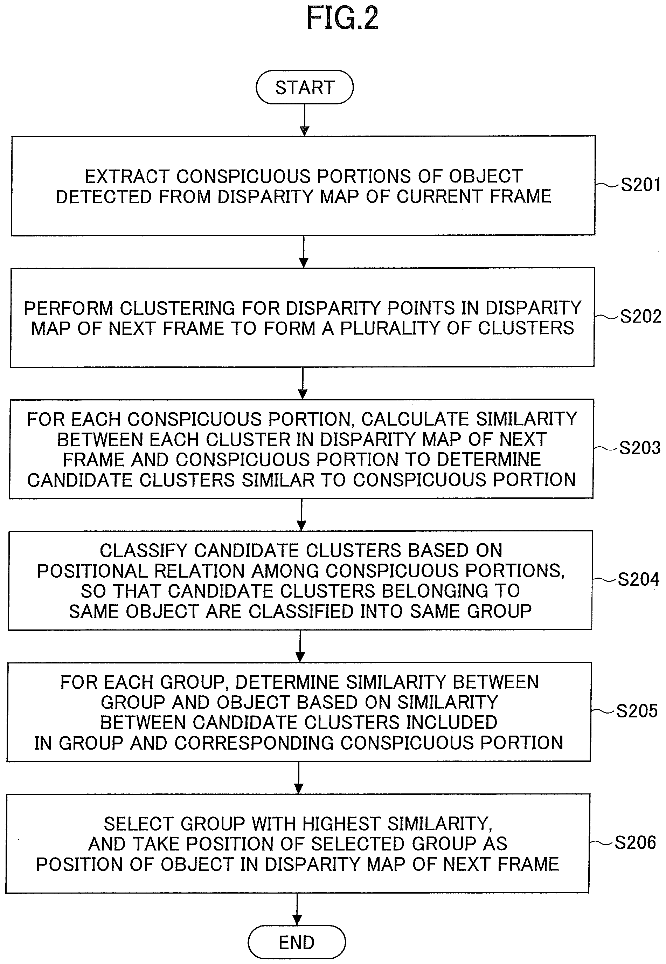

FIG. 2 is a flowchart illustrating an object tracking method according to a first embodiment of the present invention.

As shown in FIG. 2, in step S201, conspicuous portions of the object detected from a disparity map of a current frame (N-th frame) are extracted.

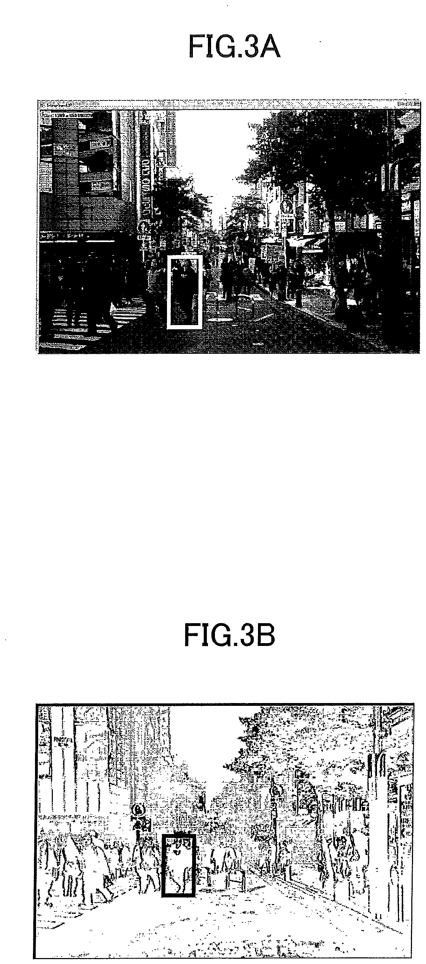

As described above, each pixel in the disparity map represents a disparity value, and the disparity value may be obtained by a stereo matching method. However, the disparity values of some pixels cannot be calculated by the stereo matching, and these pixel are points without a disparity value. According to the principle of the stereo matching, the disparity values of pixels on an edge of the object, where grayscales change, can usually be calculated. Thus, the pixels of the edge where grayscales change, usually have disparity values. For example, FIGs. 3A and 3B are schematic drawings illustrating a grayscale image and a disparity map of a current frame which include the object, respectively. In FIG. 3B, the pixels displayed in black or gray are disparity points with a disparity value, and the pixels displayed in white do not have disparity value. An object to be detected and tracked is shown by a white rectangular box in FIG. 3A, and the object detected in the disparity map is shown by a black rectangular box in FIG. 3B. As shown in FIG. 3B, the outline frame of the object and the outline of a pattern portion of the chest where grayscale changes basically have corresponding disparity points.

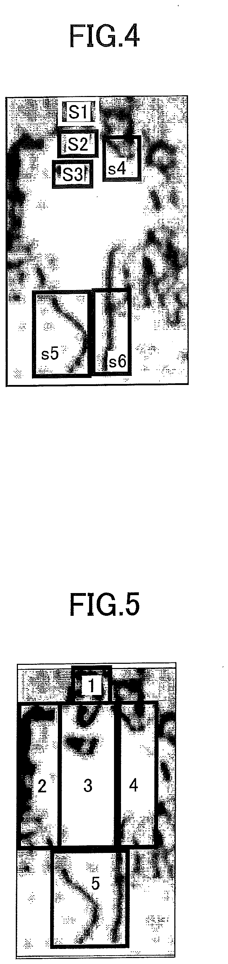

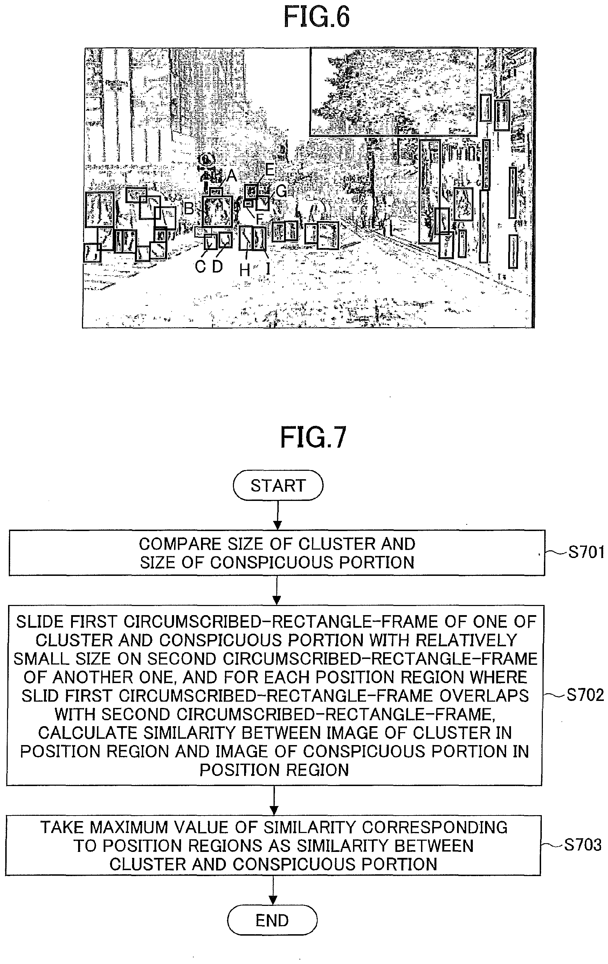

The conspicuous portions are portions that represent the object and have conspicuity. The conspicuous portions of the object may be extracted using any appropriate methods. Considering the characteristic in which the outline frame of the object and edge where grayscale changes basically have corresponding disparity points in the disparity map, as an example, in the present embodiment, clustering is performed for disparity points of the object detected from the disparity map of the current frame, and clusters obtained by the clustering are taken as the conspicuous portions. The clustering of the disparity points may be performed using any known clustering algorithm in the art, such as a K-MEANS algorithm, a CLARANS algorithm, a BIRCH algorithm, a CURE algorithm or the like, and the description thereof is omitted here. FIG. 4 is a schematic drawing illustrating an exemplary result of clustering for the object in the disparity map of the current frame shown in FIG. 3B. As shown in FIG. 4, 6 clusters, which are represented by the circumscribed rectangular boxes S1-S6, are obtained by the clustering, and serve as the conspicuous portions of the object.

Alternatively, in an exemplary method for performing the clustering for the disparity point to obtain the conspicuous portions of the object, the pedestrian detected from the disparity map of the current frame may be divided into body parts; and for each body part obtained by division, clustering may be performed for disparity points, and clusters obtained by the clustering may be taken as the conspicuous portions. The conspicuous portions obtained by this method can represent the pedestrian better.

Specifically, it may be determined into which body parts the pedestrian is divided based on the actual situation and the need. In the present embodiment, the pedestrian is divided into a head, a trunk and limbs. This division method is a common division method, and may be performed by any existing methods. For example, a division method of a head, a truck and limbs may refer to "Segmentation and Tracking of Multiple Humans in Crowded Environments", Tao Zhao, Ram Nevatia, Bo Wu, IEEE Trans. Pattern Anal. Mach. Intell. 30(7): 1198-1211 (2008). FIG. 5 is a schematic drawing illustrating an exemplary result of division of body parts for the object in the disparity map of the current frame shown in FIG. 3B. As shown in FIG. 5, five portions 1-5 are obtained by the division of the body parts, where the portion 1 is the head, the portion 3 is the trunk, and the portions 2, 4 and 5 are the limbs. After the body parts are obtained by the division, clustering is performed for disparity points in each body part, and clusters obtained by the clustering are taken as the conspicuous portions.

It should be noted that, the implementation method of dividing the pedestrian into the body parts and performing the clustering of each body part may also be applied to other objects such as a vehicle, as long as the division of the body parts is adaptively adjusted to division of components of the vehicle (such as tires, vehicle body and the like).

Referring back to FIG. 2, in step S202, clustering is performed for disparity points in a disparity map of a next frame (N+1-th frame) to form a plurality of clusters.

In this step, similarly, the clustering may also be performed for the disparity points in the disparity map of the next frame, using any known clustering algorithm in the art, such as a K-MEANS algorithm, a CLARANS algorithm, a BIRCH algorithm, a CURE algorithm or the like, and the description thereof is omitted here. FIG. 6 is a schematic drawing illustrating a plurality of clusters formed by performing clustering for disparity points in a disparity map of an N+1-th frame.

In step S203, for each conspicuous portion, similarity between each cluster in the disparity map of the next frame and the conspicuous portion is calculated to determine candidate clusters similar to the conspicuous portion.

In this step, for each conspicuous portion extracted in the N-th frame, the candidate clusters similar to the conspicuous portion are searched for in the N+1-th frame by calculating the similarity. Before describing a specific process of this step, a method for calculating similarity between two image blocks with the same size (i.e., when the size of a conspicuous portion extracted in the N-th frame is the same as the size of a cluster in the N+1-th frame) according to the present embodiment will be introduced.

In the present embodiment, different methods for calculating the similarity are used according to properties of the conspicuous portions. Specifically, it is determined whether the conspicuous portion deforms with movement of the object. In an example where the object is a pedestrian, it is considered that, the trunk part of the pedestrian basically does not deform with the movement of the object, and the limbs significantly deform with the movement of the object. Accordingly, it may be determined whether the conspicuous portion deforms with the movement of the object based on position of the conspicuous portion. For example, as described above, the object is divided into body parts, the conspicuous portions of a head part and a trunk part basically do not deform with the movement of the object, and the conspicuous portions of limbs of the pedestrian significantly deform with the movement of the pedestrian.

For the conspicuous portion that basically does not deform with the movement of the object (hereinafter abbreviated as a "stable conspicuous portion"), any appropriate methods may be used to calculate the similarity between the conspicuous portion and a cluster in the N+1-th frame.

For example, the similarity may be calculated using a disparity histogram. The disparity histogram is a statistical graph where horizontal axis represents a disparity value and vertical axis represents the number of disparity points with the disparity value. It is well-known in the art how to calculate the similarity using a disparity histogram. For example, assuming that the disparity histogram of the stable conspicuous portion Section1 is $(b_1, b_2, ... b_k)$, the disparity histogram of cluster Cluster 1 is $(c_1, c_2, ... c_k)$ (where $b_i$ is the number of the disparity points in Section1, whose disparity value is i, and $c_i$ is the number of the disparity points in Cluster1, whose disparity value is i), then a conventional method for calculating similarity between the disparity histograms is shown as the following expression (1).

$$Similarity1(Section1, Cluster1) = a1 * k / \sqrt{\frac{(b_1 - c_1)^2 + (b_2 - c_2)^2 + ... + (b_k - c_k)^2}{(b_1^2 + ... + b_k^2 + c_1^2 + ... + c_k^2)}} \quad ... (1)$$

Where a1 is a constant that is set based on the experiment or the experience.

As another example, the similarity may be calculated using a grayscale histogram. The grayscale histogram is a statistical graph where horizontal axis represents a grayscale level and vertical axis represents the number of pixels with the grayscale level. It is well-known in the art how to calculate the similarity using a grayscale histogram. For example, the similarity between histograms may be calculated using the method described in "Multiple Histogram Matching", Shapira D., Avidan S., Hel-Or Y. (2013), Proceedings of The IEEE International Conference on Image Processing. Alternatively, assuming that the grayscale histogram of the conspicuous portion Section1 is $(g_1, g_2, ..., g_{255})$, the grayscale histogram of cluster Cluster1 is $(g'_1, g'_2, ..., g'_{255})$ (where $g_i$ is the number of pixels in Section1, whose grayscale level is i, and $g'_i$ is the number of pixels in Cluster1, whose grayscale level is i), then a conventional method for calculating similarity between the grayscale histograms is shown as the following expression (2).

$$Similarity2(Section1, Cluster1) = a2 * 256 / \sqrt{\frac{(g_0 - g'_0)^2 + (g_1 - g'_1)^2 + ... + (g_{255} - g'_{255})^2}{(g_0^2 + ... + g_{255}^2 + ... + g'^2_0 + ... + g'^2_{255})}}$$

(2)

Where a2 is a constant that is set based on the experiment or the experience.

Additionally, the similarity Similartity3 (Section1, Cluster1) may also be represented using a height difference between a conspicuous portion and a cluster in the N+1-th frame, where the height difference is a difference between a height of the conspicuous portion from a center point thereof to a road surface and a height of the cluster in the N+1-th frame from a center thereof to the road surface.

It should be noted that, the above method for calculating similarity using the disparity histogram, the grayscale histogram or the height difference is merely an exemplary method, and the present embodiment is not limited to this method. The similarity may also be calculated by combining the disparity histogram, the grayscale histogram and the height difference as shown by the expression (3), or using other methods.

Similarity(Section1,Cluster1)

$$=(A1 \times Similarity1 + A2 \times Similarity2)/(A3 \times Similarity3) \quad (3)$$

A1, A2 and A3 are constants that are set based on the experiment or the experience.

For the conspicuous portion that significantly deforms with the movement of the object (hereinafter abbreviated as a "moving conspicuous portion"), similarly, any appropriate methods may also be used to calculate the similarity between the conspicuous portion and a cluster in the N+1-th frame.

For example, the similarity may be calculated using grayscale distribution. It is well-known in the art how to calculate the similarity using grayscale distribution. For example, the similarity of grayscale distribution may be calculated using the method described in "Image retrieval based on color distribution entropy", by Junding Sun, Ximin Zhang, Jiangtao Cui, Lihua Zhou, in Pattern Recognition Letters, 2006. Alternatively, assuming that a grayscale histogram of the moving conspicuous portion Section2 is $(g_1, g_2, ..., g_{255})$, a grayscale histogram of cluster Cluster1 is $(g'_1, g'_2, ..., g'_{255})$ (where $g_i$ is the number of pixels in Section2, whose grayscale level is i, and $g'_i$ is the number of pixels in Cluster1, whose grayscale level is i), then a conventional method for calculating similarity of the grayscale distribution is shown as the following expression (4).

$$Similarity4(Section2, Cluster1)$$
$$= a4 * 256 / \sqrt{\frac{((g_0 - g_{avg}) - (g'_0 - g'_{avg}))^2 + ... + ((g_{255} - g_{avg}) - (g'_{255} - g'_{avg}))^2}{((g_0 - g_{avg})^2 + ... + (g_{255} - g_{avg})^2 + ... + (g'_0 - g'_{avg})^2 + ... + (g'_{255} - g'_{avg})^2)}}$$

(4)

Where $g_{avg}=(g_0+...+g_{255})/256$, $g'_{avg}=(g'_0+...g'_{255})/256$, and a4 is a constant that is set based on the experiment or the experience.

Additionally, similarly to the above stable conspicuous portion, the similarity between the moving conspicuous portion and the cluster may also be calculated using disparity distribution or a height difference. it is also well-known in the art how to calculate the similarity using the disparity distribution or the height difference, and the description thereof is omitted here.

It should be noted that, the above method for calculating similarity using the disparity distribution, the grayscale distribution or the height difference is merely an exemplary method, and the present embodiment is not limited to this method. The similarity may also be calculated by combining the disparity distribution, the grayscale distribution and the height difference as shown by the expression (5), or using other methods.

$$\text{Similarity(Section2,Cluster1)}$$

$$=(A4 \times \text{Similarity4} + A5 \times \text{Similarity5})/(A6 \times \text{Similarity6}) \qquad (5)$$

A4, A5 and A6 are constants that are set based on the experiment or the experience, and Similarity 4, Similarity 5 and Similarity 6 are the similarity of grayscale distribution, the similarity of disparity distribution and the similarity of the height difference, respectively.

It should be noted that, distinguishing the stable conspicuous portions and the moving conspicuous portions and applying different similarity calculation methods is merely an example, and the present invention is not limited to this. In fact, the similarity may also be calculated by using the same calculation method without distinguishing the stable conspicuous portions and the moving conspicuous portions.

The method for calculating the similarity of two image blocks with the same size according to the present embodiment was introduced above. That is to say, when the size of a conspicuous portion extracted in the N-th frame is the same as the size of a cluster in the N+1-th frame, the similarity thereof may be calculated as described above. However, in fact, the size of a conspicuous portion extracted in the N-th frame and the size of a cluster in the N+1-th frame are often not the same. In the following, a method for calculating the similarity in this case will be described with reference to FIG. 7. FIG. 7 is a flowchart illustrating processing of calculating similarity between the cluster in the disparity map of the N+1-th frame and conspicuous portion in the N-th frame to determine whether the cluster is similar to the conspicuous portion according to an embodiment of the present invention.

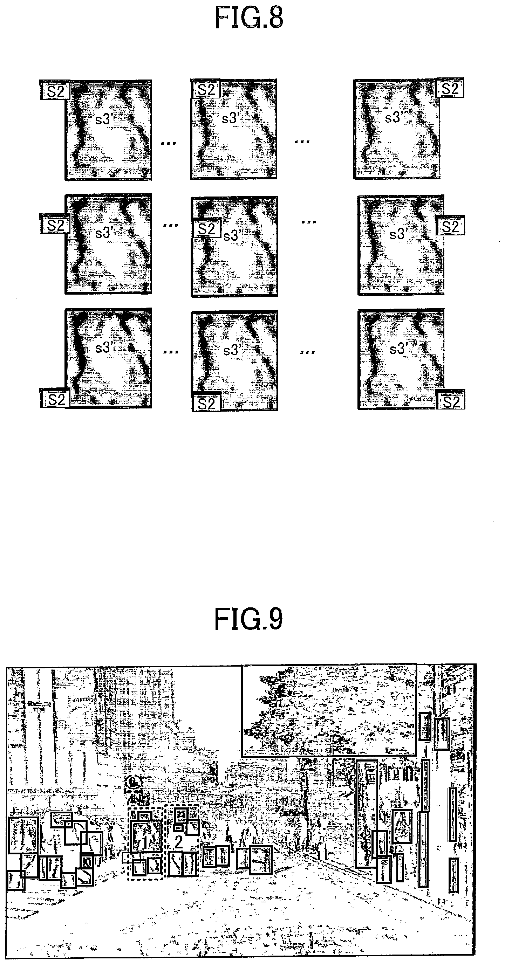

As illustrated in FIG. 7, in step S701, the size of the cluster and the size of the conspicuous portion are compared; and then, in step S702, a first circumscribed-rectangle-frame of one of the cluster and the conspicuous portion, whose size is relatively small, is slid on a second circumscribed-rectangle-frame of another one of the cluster and the conspicuous portion. FIG. 8 is a schematic drawing illustrating a process of sliding. As shown in FIG. 8, the size of the conspicuous portion Section2 is smaller than the size of the cluster Cluster3, thus the circumscribed-rectangle-frame S2 of the conspicuous portion Section2 is slid on the circumscribed-rectangle-frame S3' from the upper-left corner of the outside of S3' in a predetermined step length, until S2 traverses the whole of S3' and reaches the lower-right corner of the outside of S3'.

In the sliding process, for each position region where the slid circumscribed-rectangle-frame S2 of the conspicuous portion section2 overlaps the circumscribed-rectangle-frame S3', similarity between an image of the cluster in the position region and an image of the conspicuous portion in the position region is calculated. As shown in FIG. 8, when the circumscribed-rectangle-frame S2 has completely entered the circumscribed-rectangle-frame S3', the size of the overlapping position region is the size of the circumscribed-rectangle-frame S2; and when the circumscribed-rectangle-frame S2 has not completely entered the circumscribed-rectangle-frame S3', the size of the overlapping position region is smaller than the size of the circumscribed-rectangle-frame S2. It should be noted that, the size of the image of the cluster in the overlapping position region is the same as the size of the image of the conspicuous portion in the overlapping position region, thus the above method for calculating the similarity of two image blocks with the same size can be used to calculate the similarity.

In step S703, a maximum value of the similarity corresponding to the position regions is taken as the similarity between the cluster and the conspicuous portion.

The processing of calculating the similarity between a conspicuous portion extracted in the N-th frame and a cluster in the N+1-th frame is described above. In the present embodiment, if similarity of a cluster is greater than a first predetermined threshold, then it is regarded that the cluster is a candidate cluster similar to the conspicuous portion. According to the above method, for each conspicuous portion in the disparity map of the N-th frame, the similarity between each cluster in the disparity map of the N+1-th frame and the conspicuous portion can be calculated, and the candidate clusters similar to the conspicuous portion can be determined.

Referring back to FIG. 2, in step S204, the candidate clusters are classified based on positional relation among the conspicuous portions, so that the candidate clusters belonging to the same object are classified into the same group.

It should be noted that, the candidate clusters obtained by the above steps are just a part of the object, namely, a plurality of candidate clusters may belong to the same object. For example, the candidate clusters A to D shown in FIG. 6 may belong to the same object (the same pedestrian). In this step, the candidate clusters are classified based on the positional relation among the conspicuous portions, so that the candidate clusters belonging to the same object are classified into the same group.

The candidate clusters belonging to the same object may be classified into the same group using any appropriate methods, and the basic principle thereof is as follows. If positional relation among the n candidate clusters, which are similar to the n different conspicuous portions, respectively, is consistent with the positional relation among the n different conspicuous portions, then the n candidate clusters belong to the same object, where $1<n\leq M$, and M is the number of the conspicuous portions.

For example, the candidate clusters A-D shown in FIG. 6 are taken as an example. It is assumed that, it is determined in step S203 that, the cluster A is a candidate cluster similar to the conspicuous portion Section1 represented by the circumscribed-rectangle-frame S1 in FIG. 4, the cluster B is a candidate cluster similar to the conspicuous portion Section3 represented by the circumscribed-rectangle-frame S3 in FIG. 4, the cluster C is a candidate cluster similar to the conspicuous portion Section5 represented by the circumscribed-rectangle-frame S5 in FIG. 4, and the cluster D is a candidate cluster similar to the conspicuous portion Section6 represented by the circumscribed-rectangle-frame S6 in FIG. 4. Then, in step S204, it is determined whether the positional relation among the candidate clusters A-D is consistent with the positional relation among the conspicuous portions Section1, Section3, Section5 and Section6. The positional relation among the conspicuous portions is determined based on a structure characteristic of the human body. For example, the positional relation among the conspicuous portions Section1, Section3, Section5 and Section6 may be relation in which the height of Section3 is at least 10 cm lower than that of Section1, the heights of Section5 and Section6 are at least 60 cm lower than that of Section1 and are at least 40 cm lower than that of Section3, and the height difference between Section5 and Section6 is less than 10cm. If the height of cluster B is at least 10 cm lower than that of cluster A, the heights of cluster C and cluster D are at least 60 cm lower than that of cluster A and are at least 40 cm lower than that of cluster B, and the height difference between cluster C and cluster D is less than 10cm, then it is determined that the positional relation among clusters A-D is consistent with the positional relation among conspicuous portions Section1, Section3, Section5 and Section 6; accordingly, the 4 candidate clusters are classified into the same group. It should be noted that, all of the clusters A-D may not satisfy the positional relation among the conspicuous portions, and for example, the positional relation among the clusters A-D is consistent with the positional relation among Section1, Section5 and Section6, but the cluster B does not satisfy the positional relation. In this case, it is considered that the clusters A, C and D belong to the same object and are classified into the same group accordingly, and the cluster B forms a group alone or is classified into a group together with other candidate clusters.

FIG. 9 is a schematic drawing illustrating an exemplary classification result after classifying candidate clusters. As shown in FIG. 9, 4 candidate clusters are classified into the group 1 represented by one dotted frame, and another 5 candidate clusters are classified into the group 2 represented by the other dotted frame. It should be noted that, other candidate clusters in FIG. 9 may also be classified into other groups, and the classification thereof is omitted here.

In step S205, for each group, similarity between the group and the object is determined based on the similarity between the candidate clusters included in the group and the corresponding conspicuous portion.

It should be noted that, in fact, each group obtained by the division in step S204 is a candidate in the N+1-th frame, which corresponds to the object in the N-th frame. Thus, in this step, the similarity between each group and the object is determined, accordingly it is determined which group is the object in the N+1-th frame.

It should be noted that, the more the number of candidate clusters included in a group is and the higher the similarity between the candidate clusters and the conspicuous portions of the object is, the higher the similarity between the group and the object is. Thus, in this step, for each group, total similarity of candidate clusters included in the group is taken as the similarity between the group and the object.

In step S206, the group with the highest similarity is selected, and a position of the selected group is taken as a position of the object in the disparity map of the next frame.

For example, if the group 2 has the highest similarity, then the position of the group 2 serves the position of the object in the disparity map of N+1-th frame. Furthermore, the entire outline of the object, i.e., the entire circumscribed-rectangle-frame of the object can be obtained, based on relative positions of the clusters in the object.

The object tracking method according to the embodiment of the present invention is described above, for the example where the tracked object is a pedestrian. In this tracking method, the tracking is performed for feature portions of the pedestrian rather than the whole of the pedestrian; thus, an accurate tracking result can be obtained, even when the whole of posture of the pedestrian significantly changes or the pedestrian is partially shielded. It should be noted that, similarly, the tracking method may also be applied to another object other than a pedestrian, such as a vehicle or the like.

Moreover, the method for detecting the conspicuous portions of the object from the N+1-th frame, which were determined in the N-th frame, and tracking the object that appears in the N-th frame is described above, for an example of the N-th frame and the N+1-th frame. It should be noted that, the detection and the tracking may also be performed for each frame in a disparity frame sequence with any length, so that an object is tracked in the whole of the disparity frame sequence.

<Second Embodiment

The object tracking method according to the present embodiment is basically the same as the method according to the first embodiment. The second embodiment is different from the first embodiment in that the object tracking method further includes: determining conspicuity of the conspicuous portions of the object in the disparity map of the current frame; and allocating weights to the conspicuous portions so that the conspicuous portion with higher conspicuity has the larger weight, and in step S205' corresponding to step S205 in the first embodiment, for each group, calculating a weighted sum of the similarity of the candidate clusters included in the group, as the similarity between the group and the object. A weight of each candidate cluster is the weight of the conspicuous portion similar to the candidate cluster. In the following, this difference will be described.

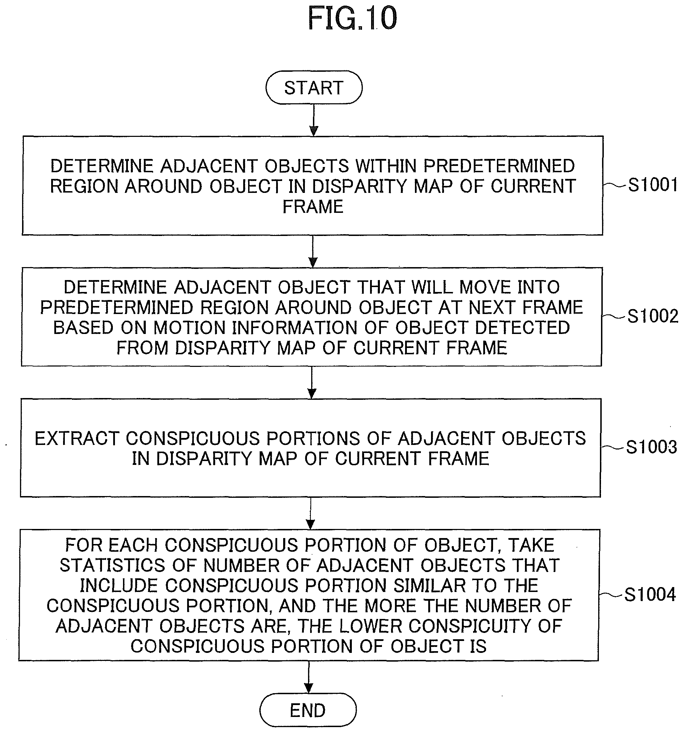

The conspicuity of the conspicuous portions of the object in the disparity map of the current frame may be determined using any appropriate methods. In the following, a method according to the present embodiment will be described with reference to FIG. 10. FIG. 10 is a flowchart illustrating processing of determining conspicuity of the conspicuous portions of the object in the disparity map of the current frame according to an embodiment of the present invention.

As shown in FIG. 10, in step S1001, adjacent objects within a predetermined region around the object in the disparity map of the current frame are determined.

The predetermined region around the object may be set in advance based on the specific situation. In this step, the adjacent objects within the predetermined region around the object is detected by any known object detection methods.

In step S1002, adjacent objects that will move into the predetermined region around the object at the next frame are determined, based on motion information of the object detected from the disparity map of the current frame.

It is considered that some objects that are not around the object at the current frame, will move into the region around the object at the next frame and will interfere with the detection and the tracking for the object; thus, in this step, the adjacent objects that will move into the predetermined region around the object at the next frame are predicted based on the motion information of the object.

In step S1003, the conspicuous portions of the adjacent objects in the disparity map of the current frame are extracted.

In this step, the conspicuous portions of the adjacent objects may be extracted using the method described above, and the description thereof is omitted here.

In step S1004, for each conspicuous portion of the object, statistics of the number of the adjacent objects that include a conspicuous portion similar to the conspicuous portion of the object are taken. Furthermore, for a conspicuous portion of the object, the more the number of the adjacent objects that include a conspicuous portion similar to the conspicuous portion of the object are, the lower the conspicuity of the conspicuous portion of the object is.

It should be noted that, the method for determining the conspicuity of the conspicuous portions of the object in the disparity of the current frame described with reference to FIG. 10 is just an example, and the present invention is not limited to this example. This method may be adjusted or any other appropriate determination methods may be used according to the specific situation. For example, step S1002 may be an optional step rather than a required step. As another example, in step S1004, for each conspicuous portion of the object, the conspicuity of the conspicuous portion may be determined based on the number of the conspicuous portions of the adjacent object that are similar to the conspicuous portion of the object, rather than the number of the adjacent objects that include a conspicuous portion similar to the conspicuous portion of the object.

Allocating the weights to the conspicuous portions so that the conspicuous portion with the higher conspicuity has the larger weight may use any appropriate allocation methods, as long as the allocated weights are in direct proportion to the conspicuity of the conspicuous portions.

In the following, the process in step S205' will be briefly introduced with reference to FIG. 6. In an example of the candidate clusters A-D shown in FIG. 6, as described above, it is assumed that, the cluster A is a candidate cluster similar to the conspicuous portion Section1 represented by the circumscribed-rectangle-frame S1 in FIG. 4, the conspicuity thereof is value1, and the weight of the conspicuous portion Section1 is weight1; the cluster B is a candidate cluster similar to the conspicuous portion Section3 represented by the circumscribed-rectangle-frame S3 in FIG. 4, the conspicuity thereof is value2, and the weight of the conspicuous portion Section3 is weight3; the cluster C is a candidate cluster similar to the conspicuous portion Section5 represented by the circumscribed-rectangle-frame S5 in FIG. 4, the conspicuity thereof is value3, and the weight of the conspicuous portion Section5 is weight5; and the cluster D is a candidate cluster similar to the conspicuous portion Section6 represented by the circumscribed-rectangle-frame S6 in FIG. 4, the conspicuity thereof is value4, and the weight of the conspicuous portion Section6 is weight6. Then in step S205', the similarity between the group including the clusters A-D and the object is calculated by the following expression (6).

$$Similarity=(value1 \times weight1+value2 \times weight3+value3 \times weight5+value4 \times weight6)$$

(6)

The object tracking method according to the second embodiment of the present invention, and in particular, the difference between the second embodiment and the first embodiment, was described above. In the present embodiment, the similarity between the group and the object is determined by further considering the conspicuity of the conspicuous portions of the object, rather than only briefly considering the number of the candidate clusters included in a group, and the similarity between the candidate clusters and the conspicuous portions of the object. It should be noted that, the higher the conspicuity of the conspicuous portion is, the stronger the ability for distinguishing the object and other objects is and the more important the similarity in the calculation is. In the present embodiment, the similarity between candidate objects and the object is calculated based on the conspicuity of the conspicuous portions, thus the accuracy of the tracking can be improved.

<Variation>

As a possible variation, besides calculating, for each conspicuous portion, similarity between each cluster in the disparity map of the next frame and the conspicuous portion to determine the candidate clusters similar to the conspicuous portion, the object tracking methods according to the above embodiments may further includes calculating, for each conspicuous portion group formed by any number of the conspicuous portions, similarity between each cluster in the disparity map of the next frame and the conspicuous portion group to determine candidate clusters similar to the conspicuous portion group. Accordingly, in step S204 shown in FIG. 2, when the candidate clusters are classified based on the positional relation among the conspicuous portions so that the candidate clusters belonging to the same object are classified into the same group, it is determined whether the positional relation among the candidate clusters conforms with relative position relation among the conspicuous portions, and it may be further determined whether the positional relation among the candidate clusters conforms with relative position relation among the conspicuous portion groups, or relative position relation among the conspicuous portions and the conspicuous portion groups.

In an example of the candidate clusters E-I shown in FIG. 6, it is assumed that, it is determined in previous steps that the cluster E is a candidate cluster similar to the group of the conspicuous portions Section1 and Section2 represented by the circumscribed-rectangle-frames S1 and S2 in FIG. 4, the cluster F is a candidate cluster similar to the conspicuous portion Section3 in FIG. 4, the cluster G is a candidate cluster similar to the conspicuous portion Section4 in FIG. 4, the cluster H is a candidate cluster similar to the conspicuous portion Section5 in FIG. 4, and the cluster I is a candidate cluster similar to the conspicuous portion Section6 in FIG. 4. Then in step S204, it is determined whether the positional relation among the candidate clusters E-I is consistent with the positional relation among the group of the conspicuous portions Section1 and Section2, and Section3, Section4, Section5 and Section6, and it is finally determined that the clusters E-I are classified into the same group.

By this way, it is possible to prevent from missing any clusters that should be classified into the same group, thus the accuracy of the tracking can be improved. For example, in the example of FIG. 6, if the similarity between the clusters in the disparity map of the next frame and the conspicuous portion for only each conspicuous portion, then the cluster E in FIG. 6 may be not similar to all of the conspicuous portions, and may not be classified into the same group together with the clusters F, G, H and I. As a result, the calculated similarity between the group and the object is affected, thus the accuracy of the tracking is affected.

<Overall Configuration of Object Tracking Apparatus>

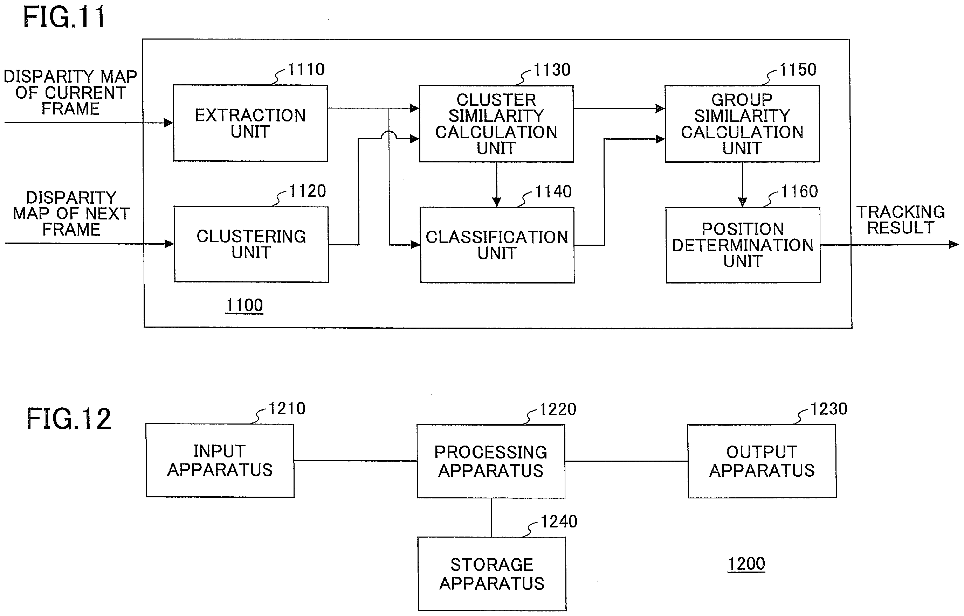

FIG. 11 is a block diagram illustrating a functional configuration of an object tracking apparatus 1100 according to an embodiment of the present invention.

As shown in FIG. 11, the object tracking apparatus 1100 includes an extraction unit 1110 configured to extract conspicuous portions of the object detected from a disparity map of a current frame; a clustering unit 1120 configured to perform clustering for disparity points in a disparity map of a next frame to form a plurality of clusters; a cluster similarity calculation unit 1130 configured to calculate, for each conspicuous portion, similarity between each cluster in the disparity map of the next frame and the conspicuous portion to determine candidate clusters similar to the conspicuous portion; a classification unit 1140 configured to classify, based on positional relation among the conspicuous portions, the candidate clusters, so that the candidate clusters belonging to the same object are classified into the same group; a group similarity calculation unit 1150 configured to determine, for each group, based on the similarity between the candidate clusters included in the group and the corresponding conspicuous portion, similarity between the group and the object; and a position determination unit 1160 configured to select the group with the highest similarity and take a position of the selected group as a position of the object in the disparity map of the next frame.

Specific functions and operations of the extraction unit 1110, the clustering unit 1120, the cluster similarity calculation unit 1130, the classification unit 1140, the group similarity calculation unit 1150 and the position determination unit 1160 described above may refer to the description relating to FIGs. 2 to 10, and the description thereof is omitted here.

<System Hardware Configuration>

FIG. 12 is a schematic drawing illustrating the overall hardware configuration of an object tracking system 1200 according to an embodiment of the present invention.

As shown in FIG. 12, the object tracking system 1200 may include an input apparatus 1210 for inputting images or information from the outside, such as a sequence of disparity map generated based on a left image and a right image photographed by a stereo camera, for example, which may include a keyboard, a mouse, a camera, etc.; a processing apparatus 1220 for implementing the above method for tracking an object according to the embodiments of the present invention or the above apparatus for tracking an object according to the embodiments of the present invention, which may include a CPU of a computer or other chips having processing ability, etc.; an output apparatus 1230 for outputting a result obtained by the above process of tracking an object, such as a position, an outline or the like of an object, which may include a screen, a printer, etc.; and a storage apparatus 1240 for storing data relating to the above process of tracking an object such as the extracted conspicuous portions of the object in the current frame, the clusters in the next frame obtained by the clustering, the candidate clusters similar to the conspicuous portions and similarity thereof, the conspicuity of the conspicuous portions or the like by a volatile method or a nonvolatile method, which may include various kinds of volatile or nonvolatile memory including a random-access memory (RAM), a read-only memory (ROM), a hard disk and a semiconductor memory.

The basic principle is described with reference to the above specific embodiments. It should be noted that, the advantage or effect described above is just an example, and the embodiments are not limited to the advantage or effect. The above descriptions of the embodiments are just examples, and various modifications, replacements or combinations may be made without departing from the scope of the present invention by persons skilled in the art.

The block diagrams of the units, apparatuses, devices and system are just examples, the connection, placement and configuration illustrated in the block diagrams related to the present invention are not limited to these examples, and the units, apparatuses, devices and system may be connected, placed or configured in any way. The terms "comprise", "include" and "have" are open-form terms, which mean and may be changed into "include and is not limited to". The terms "or" and "and" mean and may be changed into "and/or", unless the context is clearly not. The term "such as" means and may be changed to "such as, but not limited to".

The flowchart and the method according to the present invention are just examples, and not limited to the steps in the embodiments. The steps of the embodiments may be performed in any order. The terms "next", "subsequently" and "then" are just for describing the present invention, and the present invention is not limited to these terms. Furthermore, the articles "a", "an" and "the" should not be limited to the singular element.

Furthermore, the term "or" before the term "at least one" means a separate enumerating, and for example, "at least one of A, B or C" means (1) A, B or C, (2) AB, AC or BC, or (3) ABC (namely, A and B and C). Additionally, the term "example" does not mean a preferable example or an example superior to other examples.

It should be noted that, in the apparatus and method of the embodiments, each unit or each step may be divided and/or recombined. The division and/or recombination may be equivalents of the embodiments.

The present specification and the appended claims includes other examples and implementations. For example, the above functions may be implemented by a processor, hardware, software, firmware, hard-wire or any combination thereof. The features for implementing the functions may be located at any physical position where which is distributed to each position physically. The present invention may use a general-purpose processor, a digital signal processor (DSP), an ASIC, a field programmable gate array (FPGA) or other programmable logic device (PLD), a discrete gate or transistor logic, discrete hardware components or any other combination for executing the functions to realize the logic blocks, modules and circuits of the embodiments. The general-purpose processor is a micro-processor, and alternatively, the processor may be any processors, controllers, micro-controllers or state machines that can be obtained commercially. The processor may also be the combination of the computer equipment, such as the combination of a DSP and a micro-processor, the combination of plural micro-processors, or the combination of a DSP and plural micro-processors. When the function is implemented by software, the function may be stored in a computer-readable medium as one or more commands. The recording medium may be any real medium that can be accessed by a computer. Such a computer-readable medium includes a RAM, a ROM, an EEPROM, a CD-ROM or other laser discs, a magnetic disk or other magnetic memory, or any other real media that carry or store commands, data or program codes and are accessed by the computer. Such disk and disc include a CD, a laser disc, an optical disc, a DVD disc, a floppy disk and a blue-ray disc, and the disk usually reproduces data and the disc reproduces data by a laser.

The operations may be performed by a computer program product. For example, such computer program product may be a tangible medium where computer-readable commands are stored (or coded), and the commands may be executed by one or more processors to perform the operation. The computer program product may include packaging material.

As will be understood by the skilled person, various modifications may be made to the embodiments without departing from the scope of the present invention as defined in the claims.

**Claims**

1. A method for tracking an object, the method comprising:

   extracting conspicuous portions (S201) of a target object detected from a disparity map of a current frame, wherein extracting the conspicuous portions of the target object detected from the disparity map of the current frame includes performing clustering for disparity points of the target object detected from the disparity map of the current frame, and taking clusters obtained by the clustering as the conspicuous portions;

   performing clustering (S202) for disparity points in a disparity map of a next frame to form a plurality of clusters (S1-S6);

   calculating (S203), for each conspicuous portion of the target object, similarity between each cluster of said plurality of clusters and the conspicuous portion to determine candidate clusters (A-D) similar to the conspicuous portion;

   classifying (S204), based on positional relation among the conspicuous portions of the target object, a plurality of the candidate clusters (A-D) that belong to a same object into the same group, resulting in a plurality of groups of clusters, wherein if positional relation among n candidate clusters, which are similar to n different conspicuous portions, respectively, is consistent with the positional relation among the n different conspicuous portions, the n candidate clusters belong to the same object, where $1<n\leq M$, and M is the number of the conspicuous portions;

   determining (S205), for each group, based on the similarity between each candidate cluster included in the group and the corresponding conspicuous portion, similarity between the group and the target object; and

   selecting (S206) the group with the highest similarity and taking a position of the selected group as a position of the target object in the disparity map of the next frame.

2. The method for tracking an object according to claim 1, further comprising:

   determining conspicuity of the conspicuous portions of the target object in the disparity map of the current frame; and

   allocating weights to the conspicuous portions so that the conspicuous portion with higher conspicuity has the larger weight,

   wherein determining, for each group, based on the similarity between the candidate clusters included in the group and the corresponding conspicuous portion, the similarity between the group and the target object includes calculating, for each group, a weighted sum of the similarity of the candidate clusters included in the group, as the similarity between the group and the target object,

   wherein a weight of each candidate cluster is the weight of the conspicuous portion similar to the candidate cluster.

3. The method for tracking an object according to claim 2,

   wherein determining the conspicuity of the conspicuous portions of the target object in the disparity map of the current frame includes

   determining adjacent objects within a predetermined region around the target object in the disparity map of the current frame;

   determining, based on motion information of the target object detected from the disparity map of the current frame, adjacent objects that will move into the predetermined region around the target object at the next frame;

   extracting the conspicuous portions of the adjacent objects in the disparity map of the current frame; and

   taking, for each conspicuous portion of the target object, statistics of the number of the adjacent objects that include a conspicuous portion similar to the conspicuous portion of the target object, wherein the more the number of the adjacent objects are the lower the conspicuity of the conspicuous portion of the target object is.

4. The method for tracking an object according to any one preceding claim,

   wherein the target object is a pedestrian, and

   wherein extracting the conspicuous portions of the object detected from the disparity map of the current frame includes:

dividing the pedestrian detected from the disparity map of the current frame into body parts; and
for each body part obtained by division, performing clustering for disparity points, and taking clusters obtained by the clustering as the conspicuous portions.

5. The method for tracking an object according to any one preceding claim,
wherein calculating, for each conspicuous portion, the similarity between each cluster in the disparity map of the next frame and the conspicuous portion to determine the candidate clusters similar to the conspicuous portion includes:

for each cluster in the disparity map of the next frame,

comparing the size of the cluster and the size of the conspicuous portion,
sliding a first circumscribed-rectangle-frame of one of the cluster and the conspicuous portion with a relatively small size on a second circumscribed-rectangle-frame of another one of the cluster and the conspicuous portion, and calculating, for each position region where the slid first circumscribed-rectangle-frame overlaps with the second circumscribed-rectangle-frame, similarity between an image of the cluster in the position region and an image of the conspicuous portion in the position region, and
taking a maximum value of the similarity corresponding to the position regions as the similarity between the cluster and the conspicuous portion; and

taking the clusters whose similarities are greater than a first predetermined threshold as the candidate clusters similar to the conspicuous portion.

6. The method for tracking an object according to claim 5,
wherein calculating, for each position region where the slid first circumscribed-rectangle-frame overlaps with the second circumscribed-rectangle-frame, the similarity between the image of the cluster in the position region and the image of the conspicuous portion in the position region includes:

determining whether the conspicuous portion deforms with movement of the target object;
for the conspicuous portion that basically does not deform with the movement of the target object, calculating the similarity between the image of the cluster in the position region and the image of the conspicuous portion in the position region, using at least one of a disparity histogram, a grayscale histogram, and heights from the ground; and
for the conspicuous portion that deforms with the movement of the target object, calculating the similarity between the image of the cluster in the position region and the image of the conspicuous portion in the position region, using at least one of disparity distribution, grayscale distribution, and heights from the ground.

7. The method for tracking an object according to any one preceding claim, further comprising:
calculating, for each conspicuous portion group formed by any number of the conspicuous portions, similarity between each cluster in the disparity map of the next frame and the conspicuous portion group to determine candidate clusters similar to the conspicuous portion group.

8. An apparatus for tracking an object, the apparatus comprising:

an extraction unit (1110) configured to extract conspicuous portions of a target object detected from a disparity map of a current frame, wherein extracting the conspicuous portions of the target object detected from the disparity map of the current frame includes performing clustering for disparity points of the target object detected from the disparity map of the current frame, and taking clusters obtained by the clustering as the conspicuous portions;
a clustering unit (1120) configured to perform clustering for disparity points in a disparity map of a next frame to form a plurality of clusters;
a cluster similarity calculation unit (1130) configured to calculate, for each conspicuous portion of the target object, similarity between each cluster of said plurality of clusters and the conspicuous portion to determine candidate clusters similar to the conspicuous portion;
a classification unit (1140) configured to classify, based on positional relation among the conspicuous portions of the target object, the candidate clusters that belong to a same object are classified into a same group, resulting in a plurality of groups of clusters, wherein if positional relation among n candidate clusters, which are similar to n different conspicuous portions, respectively, is consistent with the positional relation among the n different conspicuous portions, the n candidate clusters belong to the same object, where 1<n≤M, and M is the number of the conspicuous portions;

a group similarity calculation unit (1150) configured to determine, for each group, based on the similarity between each candidate cluster included in the group and the corresponding conspicuous portion, similarity between the group and the target object; and

a position determination unit (1160) configured to select the group with the highest similarity and take a position of the selected group as a position of the target object in the disparity map of the next frame.

9. A non-transitory computer-readable recording medium having stored therein a program for causing a computer to execute a method in accordance with any one of claims 1 to 7.

**Patentansprüche**

1. Verfahren zum Verfolgen eines Objekts, wobei das Verfahren umfasst:

Extrahieren von auffälligen Abschnitten (S201) eines Zielobjekts, das aus einer Ungleichheitskarte eines aktuellen Rahmens ermittelt wurde, worin das Extrahieren der auffälligen Abschnitte des Zielobjekts, das aus der Ungleichheitskarte des aktuellen Rahmens ermittelt wurde, umfasst: Durchführen einer Clusterbildung für Ungleichheitspunkte des Zielobjekts, die aus der Ungleichheitskarte des aktuellen Rahmens ermittelt werden, und Übernehmen von durch die Clusterbildung erlangten Clustern als die auffälligen Abschnitte;

Durchführen einer Clusterbildung (S202) für Ungleichheitspunkte in einer Ungleichheitskarte eines nächsten Rahmens, um eine Vielzahl von Clustern (S1-S6) zu bilden;

für jeden auffälligen Abschnitt des Zielobjekts erfolgendes Berechnen (S203) der Ähnlichkeit zwischen jedem Cluster aus der Vielzahl von Clustern und dem auffälligen Abschnitt, um Clusterkandidaten (A-D) zu bestimmen, die dem auffälligen Abschnitt ähnlich sind;

auf der Positionsbeziehung zwischen den auffälligen Abschnitten des Zielobjekts beruhendes Klassifizieren (S204) einer Vielzahl der Clusterkandidaten (A-D), die zu einem gleichen Objekt gehören, in die gleiche Gruppe, was zu einer Vielzahl von Gruppen von Clustern führt, worin die n Clusterkandidaten zum gleichen Objekt gehören, wenn die Positionsbeziehung zwischen n Clusterkandidaten, die beziehungsweise n unterschiedlichen auffälligen Abschnitten ähnlich sind, konsistent mit der Positionsbeziehung zwischen den n unterschiedlichen auffälligen Abschnitten ist, wobei 1 < n ≤ M und M die Anzahl der auffälligen Abschnitte ist;

für jede Gruppe erfolgendes Bestimmen (S205) der Ähnlichkeit zwischen der Gruppe und dem Zielobjekt auf der Grundlage der Ähnlichkeit zwischen jedem in der Gruppe enthaltenen Clusterkandidaten und dem entsprechenden auffälligen Abschnitt; und

Auswählen (S206) der Gruppe mit der höchsten Ähnlichkeit und Übernehmen einer Position der ausgewählten Gruppe als eine Position des Zielobjekts in der Ungleichheitskarte des nächsten Rahmens.

2. Verfahren zum Verfolgen eines Objekts nach Anspruch 1, ferner umfassend:

Bestimmen der Auffälligkeit der auffälligen Abschnitte des Zielobjekts in der Ungleichheitskarte des aktuellen Rahmens; und

Zuordnen von Gewichten zu den auffälligen Abschnitten, sodass der auffällige Abschnitt mit der höheren Auffälligkeit das größere Gewicht hat, worin das Bestimmen der Ähnlichkeit zwischen der Gruppe und dem Zielobjekt auf der Grundlage der Ähnlichkeit zwischen dem in der Gruppe enthaltenen Clusterkandidaten und dem entsprechenden auffälligen Abschnitt für jede Gruppe einschließt:

für jede Gruppe erfolgendes Berechnen einer gewichteten Summe der Ähnlichkeit der in der Gruppe enthaltenen Clusterkandidaten als die Ähnlichkeit zwischen der Gruppe und dem Zielobjekt, worin ein Gewicht jedes Clusterkandidaten das Gewicht des auffälligen Abschnitts ist, der dem Clusterkandidaten ähnlich ist.

3. Verfahren zum Verfolgen eines Objekts nach Anspruch 2, worin das Bestimmen der Auffälligkeit der auffälligen Abschnitte des Zielobjekts in der Ungleichheitskarte des aktuellen Rahmens umfasst:

Bestimmen von benachbarten Objekten innerhalb eines vorbestimmten Bereichs um das Zielobjekt in der Ungleichheitskarte des aktuellen Rahmens;

auf Bewegungsinformationen des Zielobjekts, die aus der Ungleichheitskarte des aktuellen Rahmens ermittelt werden, beruhendes Bestimmen benachbarter Objekte, die sich im nächsten Rahmen in den vorbestimmten Bereich um das Zielobjekt bewegen werden;

Extrahieren der auffälligen Abschnitte der benachbarten Objekte in der Ungleichheitskarte des aktuellen Rahmens; und

für jeden auffälligen Abschnitt des Zielobjekts erfolgendes Erstellen einer Statistik der Anzahl derjenigen benachbarten Objekte, die einen auffälligen Abschnitt ähnlich dem auffälligen Abschnitt des Zielobjekts enthalten, worin die Auffälligkeit des auffälligen Abschnitts des Zielobjekts desto geringer ist, je größer die Anzahl der benachbarten Objekte ist.

4. Verfahren zum Verfolgen eines Objekts nach einem der vorhergehenden Ansprüche,
   worin das Zielobjekt ein Fußgänger ist, und
   worin das Extrahieren der auffälligen Abschnitte des Objekts, das aus der Ungleichheitskarte des aktuellen Rahmens ermittelt wurde, einschließt:

   Aufteilen des aus der Ungleichheitskarte des aktuellen Rahmens ermittelten Fußgängers in Körperteile; und
   für jeden durch Aufteilung erlangten Körperteil erfolgendes Durchführen einer Clusterbildung für Ungleichheitspunkte und Übernehmen von durch die Clusterbildung erlangten Clustern als die auffälligen Abschnitte.

5. Verfahren zum Verfolgen eines Objekts nach einem der vorhergehenden Ansprüche,
   worin das für jeden auffälligen Abschnitt erfolgende Berechnen der Ähnlichkeit zwischen jedem Cluster in der Ungleichheitskarte des nächsten Rahmens und dem auffälligen Abschnitt, um Clusterkandidaten zu bestimmen, die dem auffälligen Abschnitt ähnlich sind, einschließt:
   für jeden Cluster in der Ungleichheitskarte des nächsten Rahmens:

   Vergleichen der Größe des Clusters und der Größe des auffälligen Abschnitts,
   Verschieben eines ersten umschriebenen Rechteckrahmens von einem der Cluster und des auffälligen Abschnitts mit einer relativ kleinen Größe auf einen zweiten umschriebenen Rechteckrahmen eines anderen der Cluster und des auffälligen Abschnitts und für jeden Positionsbereich, wo der verschobene erste umschriebene Rechteckrahmen sich mit dem zweiten umschriebenen Rechteckrahmen überlappt, erfolgendes Berechnen der Ähnlichkeit zwischen einem Bild des Clusters im Positionsbereich und einem Bild des auffälligen Abschnitts im Positionsbereich, und
   Übernehmen eines Maximalwerts der Ähnlichkeit, der den Positionsbereichen entspricht, als die Ähnlichkeit zwischen dem Cluster und dem auffälligen Abschnitt; und
   Übernehmen derjenigen Cluster, deren Ähnlichkeiten größer als ein erster vorbestimmter Schwellenwert sind, als die Clusterkandidaten, die dem auffälligen Abschnitt ähnlich sind.

6. Verfahren zum Verfolgen eines Objekts nach Anspruch 5,
   worin das für jeden Positionsbereich, wo der verschobene erste umschriebene Rechteckrahmen sich mit dem zweiten umschriebenen Rechteckrahmen überlappt, erfolgende Berechnen der Ähnlichkeit zwischen dem Bild des Clusters im Positionsbereich und dem Bild des auffälligen Abschnitts im Positionsbereich einschließt:

   Bestimmen, ob der auffällige Abschnitt sich mit der Bewegung des Zielobjekts verformt;
   für den auffälligen Abschnitt, der sich im Wesentlichen nicht mit der Bewegung des Zielobjekts verformt, erfolgendes Berechnen der Ähnlichkeit zwischen dem Bild des Clusters im Positionsbereich und dem Bild des auffälligen Abschnitts im Positionsbereich, wobei mindestens eines von einem Ungleichheitshistogramm, einem Graustufenhistogramm und Höhen vom Boden verwendet wird; und
   für den auffälligen Abschnitt, der sich mit der Bewegung des Zielobjekts verformt, erfolgendes Berechnen der Ähnlichkeit zwischen dem Bild des Clusters im Positionsbereich und dem Bild des auffälligen Abschnitts im Positionsbereich, wobei mindestens eines von einer Ungleichheitsverteilung, einer Graustufenverteilung und Höhen vom Boden verwendet wird.

7. Verfahren zum Verfolgen eines Objekts nach einem der vorhergehenden Ansprüche, ferner umfassend:

   für jede Gruppe auffälliger Abschnitte, die durch eine beliebige Anzahl der auffälligen Abschnitte gebildet wird, erfolgendes Berechnen der Ähnlichkeit zwischen jedem Cluster in der Ungleichheitskarte des nächsten Rahmens und der Gruppe auffälliger Abschnitte, um Clusterkandidaten zu bestimmen, die der Gruppe auffälliger Abschnitte ähnlich sind.

8. Vorrichtung zum Verfolgen eines Objekts, wobei die Vorrichtung umfasst:

eine Extraktionseinheit (1110), die dafür konfiguriert ist, auffällige Abschnitte eines Zielobjekts zu extrahieren, das aus einer Ungleichheitskarte eines aktuellen Rahmens ermittelt wurde, worin das Extrahieren der auffälligen Abschnitte des Zielobjekts, das aus der Ungleichheitskarte des aktuellen Rahmens ermittelt wurde, umfasst: Durchführen einer Clusterbildung für Ungleichheitspunkte des Zielobjekts, das aus der Ungleichheitskarte des aktuellen Rahmens ermittelt wurde, und Übernehmen von durch die Clusterbildung erlangten Clustern als die auffälligen Abschnitte;
eine Clusterbildungseinheit (1120), die dafür konfiguriert ist, Clusterbildung für Ungleichheitspunkte in einer Ungleichheitskarte eines nächsten Rahmens durchzuführen, um eine Vielzahl von Clustern zu bilden;
eine Clusterähnlichkeitsberechnungseinheit (1130), die dafür konfiguriert ist, für jeden auffälligen Abschnitt des Zielobjekts die Ähnlichkeit zwischen jedem Cluster aus der Vielzahl von Clustern und dem auffälligen Abschnitt zu berechnen, um Clusterkandidaten zu bestimmen, die dem auffälligen Abschnitt ähnlich sind;
eine Klassifizierungseinheit (1140), die dafür konfiguriert ist, auf der Grundlage der Positionsbeziehung zwischen den auffälligen Abschnitten des Zielobjekts die Clusterkandidaten, die zu einem gleichen Objekt gehören, in eine gleiche Gruppe zu klassifizieren, was zu einer Vielzahl von Gruppen von Clustern führt, wobei, wenn die Positionsbeziehung zwischen n Clusterkandidaten, die beziehungsweise n unterschiedlichen auffälligen Abschnitten ähnlich sind, konsistent mit der Positionsbeziehung zwischen den n unterschiedlichen auffälligen Abschnitten ist, die n Clusterkandidaten zum gleichen Objekt gehören, wobei $1 < n \leq M$ und M die Anzahl der auffälligen Abschnitte ist;
eine Gruppenähnlichkeitsberechnungseinheit (1150), die dafür konfiguriert ist, für jede Gruppe auf der Grundlage der Ähnlichkeit zwischen jedem in der Gruppe enthaltenen Clusterkandidaten und dem entsprechenden auffälligen Abschnitt die Ähnlichkeit zwischen der Gruppe und dem Zielobjekt zu bestimmen; und
eine Positionsbestimmungseinheit (1160), die dafür konfiguriert ist, die Gruppe mit der größten Ähnlichkeit auszuwählen und eine Position der ausgewählten Gruppe als Position des Zielobjekts in der Ungleichheitskarte des nächsten Rahmens zu übernehmen.

9. Nichttransitorisches computerlesbares Aufzeichnungsmedium, in dem ein Programm zum Veranlassen eines Computers, ein Verfahren nach einem der Ansprüche 1 bis 7 auszuführen, gespeichert ist.

## Revendications

1. Procédé pour suivre un objet, le procédé comprenant :

l'extraction de sections visibles (S201) d'un objet cible qui est détecté à partir d'une carte de disparité d'une trame courante, dans lequel l'extraction des sections visibles de l'objet cible qui est détecté à partir de la carte de disparité de la trame courante inclut la réalisation d'un regroupement pour des points de disparité de l'objet cible qui est détecté à partir de la carte de disparité de la trame courante et la considération de groupements qui sont obtenus au moyen du regroupement en tant que sections visibles ;
la réalisation d'un regroupement (S202) pour des points de disparité dans une carte de disparité d'une trame suivante pour former une pluralité de groupements (S1-S6) ;
le calcul (S203), pour chaque section visible de l'objet cible, d'une similarité entre chaque groupement de ladite pluralité de groupements et la section visible pour déterminer des groupements candidats (A-D) qui sont similaires à la section visible ;
la classification (S204), sur la base d'une relation de positionnement entre les sections visibles de l'objet cible, d'une pluralité des groupements candidats (A-D) qui appartiennent à un même objet à l'intérieur du même groupe, d'où l'obtention d'une pluralité de groupes de groupements, dans lequel, si une relation de positionnement entre n groupements candidats, qui sont respectivement similaires à n sections visibles différentes, est cohérente avec la relation de positionnement entre les n sections visibles différentes, les n groupements candidats appartiennent au même objet, où $1 < n \leq M$, et M est le nombre des sections visibles ;
la détermination (S205), pour chaque groupe, d'une similarité entre le groupe et l'objet cible sur la base de la similarité entre chaque groupement candidat qui est inclus dans le groupe et la section visible correspondante ; et
la sélection (S206) du groupe qui présente la similarité la plus élevée et la considération d'une position du groupe sélectionné en tant que position de l'objet cible dans la carte de disparité de la trame suivante.

**2.** Procédé pour suivre un objet selon la revendication 1, comprenant en outre :

la détermination de la visibilité des sections visibles de l'objet cible dans la carte de disparité de la trame courante ; et

l'allocation de poids aux sections visibles, de telle sorte que la section visible qui présente une visibilité plus élevée se voit allouer le poids plus important,

dans lequel la détermination, pour chaque groupe, de la similarité entre le groupe et l'objet cible sur la base de la similarité entre les groupements candidats qui sont inclus dans le groupe et la section visible correspondante inclut :

le calcul, pour chaque groupe, d'une somme pondérée de la similarité des groupements candidats qui sont inclus dans le groupe en tant que similarité entre le groupe et l'objet cible,

dans lequel un poids de chaque groupement candidat est le poids de la section visible qui est similaire au groupement candidat.

**3.** Procédé pour suivre un objet selon la revendication 2,

dans lequel la détermination de la visibilité des sections visibles de l'objet cible dans la carte de disparité de la trame courante inclut :

la détermination d'objets adjacents à l'intérieur d'une région prédéterminée autour de l'objet cible dans la carte de disparité de la trame courante ;

la détermination, sur la base d'informations de déplacement de l'objet cible qui sont détectées à partir de la carte de disparité de la trame courante, d'objets adjacents qui se déplaceront à l'intérieur de la région prédéterminée autour de l'objet cible au niveau de la trame suivante ;

l'extraction des sections visibles des objets adjacents dans la carte de disparité de la trame courante ; et

la considération, pour chaque section visible de l'objet cible, de statistiques du nombre des objets adjacents qui incluent une section visible qui est similaire à la section visible de l'objet cible, dans lequel plus le nombre des objets adjacents est important, plus la visibilité de la section visible de l'objet cible est faible.

**4.** Procédé pour suivre un objet selon l'une quelconque des revendications qui précèdent,

dans lequel l'objet cible est un piéton, et

dans lequel l'extraction des sections visibles de l'objet qui est détecté à partir de la carte de disparité de la trame courante inclut :

la division du piéton qui est détecté à partir de la carte de disparité de la trame courante en parties du corps ; et

pour chaque partie du corps qui est obtenue au moyen de la division, la réalisation d'un regroupement pour des points de disparité et la considération de groupements qui sont obtenus au moyen du regroupement en tant que sections visibles.

**5.** Procédé pour suivre un objet selon l'une quelconque des revendications qui précèdent,

dans lequel le calcul, pour chaque section visible, de la similarité entre chaque groupement dans la carte de disparité de la trame suivante et la section visible pour déterminer les groupements candidats qui sont similaires à la section visible inclut :

pour chaque groupement dans la carte de disparité de la trame suivante :

la comparaison de la taille du groupement et de la taille de la section visible ;

le fait de faire glisser une première trame en forme de rectangle circonscrit d'un parmi le groupement et la section visible d'une taille relativement petite sur une seconde trame en forme de rectangle circonscrit d'un autre parmi le groupement et la section visible, et le calcul, pour chaque région de position au niveau de laquelle la première trame en forme de rectangle circonscrit qui a subi un glissement chevauche la seconde trame en forme de rectangle circonscrit, d'une similarité entre une image du groupement dans la région de position et une image de la section visible dans la région de position, et

la considération d'une valeur maximum de la similarité qui correspond aux régions de position en tant que similarité entre le groupement et la section visible ; et

la considération des groupements dont les similarités sont supérieures à un premier seuil prédéterminé en tant que groupements candidats qui sont similaires à la section visible.

**6.** Procédé pour suivre un objet selon la revendication 5,
dans lequel le calcul, pour chaque région de position au niveau de laquelle la première trame en forme de rectangle circonscrit qui a subi un glissement chevauche la seconde trame en forme de rectangle circonscrit, de la similarité entre l'image du groupement dans la région de position et l'image de la section visible dans la région de position inclut :

la détermination de si oui ou non la section visible se déforme lors du déplacement de l'objet cible ;
pour la section visible qui, fondamentalement, ne se déforme pas lors du déplacement de l'objet cible, le calcul de la similarité entre l'image du groupement dans la région de position et l'image de la section visible dans la région de position, en utilisant au moins l'un parmi un histogramme de disparité, un histogramme d'échelle de gris et des hauteurs par rapport au sol ; et
pour la section visible qui se déforme lors du déplacement de l'objet cible, le calcul de la similarité entre l'image du groupement dans la région de position et l'image de la section visible dans la région de position en utilisant au moins l'un parmi une distribution de disparité, une distribution d'échelle de gris et des hauteurs par rapport au sol.

**7.** Procédé pour suivre un objet selon l'une quelconque des revendications qui précèdent, comprenant en outre :
le calcul, pour chaque groupe de sections visibles qui est formé par un quelconque nombre des sections visibles, d'une similarité entre chaque groupement dans la carte de disparité de la trame suivante et le groupe de sections visibles pour déterminer des groupements candidats qui sont similaires au groupe de sections visibles.

**8.** Appareil pour suivre un objet, l'appareil comprenant :

une unité d'extraction (1110) qui est configurée pour extraire des sections visibles d'un objet cible qui est détecté à partir d'une carte de disparité d'une trame courante, dans lequel l'extraction des sections visibles de l'objet cible qui est détecté à partir de la carte de disparité de la trame courante inclut la réalisation d'un regroupement pour des points de disparité de l'objet cible qui est détecté à partir de la carte de disparité de la trame courante et la considération de groupements qui sont obtenus au moyen du regroupement en tant que sections visibles ;
une unité de regroupement (1120) qui est configurée pour réaliser un regroupement pour des points de disparité dans une carte de disparité d'une trame suivante pour former une pluralité de groupements ;
une unité de calcul de similarité de groupement (1130) qui est configurée pour calculer, pour chaque section visible de l'objet cible, une similarité entre chaque groupement de ladite pluralité de groupements et la section visible pour déterminer les groupements candidats qui sont similaires à la section visible ;
une unité de classification (1140) qui est configurée pour classifier, sur la base d'une relation de positionnement entre les sections visibles de l'objet cible, les groupements candidats qui appartiennent à un même objet à l'intérieur d'un même groupe, d'où l'obtention d'une pluralité de groupes de groupements, dans lequel, si une relation de positionnement entre n groupements candidats, qui sont respectivement similaires à n sections visibles différentes, est cohérente avec la relation de positionnement entre les n sections visibles différentes, les n groupements candidats appartiennent au même objet, où $1 < n \leq M$, et M est le nombre des sections visibles ;
une unité de calcul de similarité de groupe (1150) qui est configurée pour déterminer, pour chaque groupe, sur la base de la similarité entre chaque groupement candidat qui est inclus dans le groupe et la section visible correspondante, une similarité entre le groupe et l'objet cible ; et
une unité de détermination de position (1160) qui est configurée pour sélectionner le groupe qui présente la similarité la plus élevée et pour considèrer une position du groupe sélectionné en tant que position de l'objet cible dans la carte de disparité de la trame suivante.

**9.** Support d'enregistrement non transitoire pouvant être lu par un ordinateur comportant, stocké en son sein, un programme pour forcer un ordinateur à exécuter un procédé selon l'une quelconque des revendications 1 à 7.

# FIG.1

# FIG.2

START

EXTRACT CONSPICUOUS PORTIONS OF OBJECT
DETECTED FROM DISPARITY MAP OF CURRENT FRAME — S201

PERFORM CLUSTERING FOR DISPARITY POINTS IN DISPARITY
MAP OF NEXT FRAME TO FORM A PLURALITY OF CLUSTERS — S202

FOR EACH CONSPICUOUS PORTION, CALCULATE SIMILARITY
BETWEEN EACH CLUSTER IN DISPARITY MAP OF NEXT
FRAME AND CONSPICUOUS PORTION TO DETERMINE
CANDIDATE CLUSTERS SIMILAR TO CONSPICUOUS PORTION — S203

CLASSIFY CANDIDATE CLUSTERS BASED ON
POSITIONAL RELATION AMONG CONSPICUOUS PORTIONS,
SO THAT CANDIDATE CLUSTERS BELONGING TO
SAME OBJECT ARE CLASSIFIED INTO SAME GROUP — S204

FOR EACH GROUP, DETERMINE SIMILARITY BETWEEN
GROUP AND OBJECT BASED ON SIMILARITY
BETWEEN CANDIDATE CLUSTERS INCLUDED
IN GROUP AND CORRESPONDING CONSPICUOUS PORTION — S205

SELECT GROUP WITH HIGHEST SIMILARITY,
AND TAKE POSITION OF SELECTED GROUP AS
POSITION OF OBJECT IN DISPARITY MAP OF NEXT FRAME — S206

END

# FIG.3A

# FIG.3B

# FIG.4

# FIG.5

# FIG.6

# FIG.7

START

COMPARE SIZE OF CLUSTER AND
SIZE OF CONSPICUOUS PORTION | ~S701

SLIDE FIRST CIRCUMSCRIBED-RECTANGLE-FRAME OF ONE OF
CLUSTER AND CONSPICUOUS PORTION WITH RELATIVELY
SMALL SIZE ON SECOND CIRCUMSCRIBED-RECTANGLE-FRAME
OF ANOTHER ONE, AND FOR EACH POSITION REGION WHERE
SLID FIRST CIRCUMSCRIBED-RECTANGLE-FRAME OVERLAPS | ~S702
WITH SECOND CIRCUMSCRIBED-RECTANGLE-FRAME,
CALCULATE SIMILARITY BETWEEN IMAGE OF CLUSTER IN
POSITION REGION AND IMAGE OF CONSPICUOUS PORTION IN
POSITION REGION

TAKE MAXIMUM VALUE OF SIMILARITY CORRESPONDING
TO POSITION REGIONS AS SIMILARITY BETWEEN | ~S703
CLUSTER AND CONSPICUOUS PORTION

END

# FIG.8

# FIG.9

# FIG.10

START

DETERMINE ADJACENT OBJECTS WITHIN PREDETERMINED REGION AROUND OBJECT IN DISPARITY MAP OF CURRENT FRAME — S1001

DETERMINE ADJACENT OBJECT THAT WILL MOVE INTO PREDETERMINED REGION AROUND OBJECT AT NEXT FRAME BASED ON MOTION INFORMATION OF OBJECT DETECTED FROM DISPARITY MAP OF CURRENT FRAME — S1002

EXTRACT CONSPICUOUS PORTIONS OF ADJACENT OBJECTS IN DISPARITY MAP OF CURRENT FRAME — S1003

FOR EACH CONSPICUOUS PORTION OF OBJECT, TAKE STATISTICS OF NUMBER OF ADJACENT OBJECTS THAT INCLUDE CONSPICUOUS PORTION SIMILAR TO THE CONSPICUOUS PORTION, AND THE MORE THE NUMBER OF ADJACENT OBJECTS ARE, THE LOWER CONSPICUITY OF CONSPICUOUS PORTION OF OBJECT IS — S1004

END

## FIG.11

DISPARITY MAP OF CURRENT FRAME → EXTRACTION UNIT (1110)

DISPARITY MAP OF NEXT FRAME → CLUSTERING UNIT (1120)

CLUSTER SIMILARITY CALCULATION UNIT (1130)

CLASSIFICATION UNIT (1140)

GROUP SIMILARITY CALCULATION UNIT (1150)

POSITION DETERMINATION UNIT (1160) → TRACKING RESULT

1100

## FIG.12

INPUT APPARATUS (1210) — PROCESSING APPARATUS (1220) — OUTPUT APPARATUS (1230)

STORAGE APPARATUS (1240)

1200

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120194680 A
- US 7418112 A

**Non-patent literature cited in the description**

- **KELLY P et al.** Robust Pedestrian Detection and Tracking in Crowded Scenes. *IMAGE AND COMPUTING,* 02 September 2009, vol. 27 (10), 1445-1458
- **TAO ZHAO ; RAM NEVATIA ; BO WU.** Segmentation and Tracking of Multiple Humans in Crowded Environments. *IEEE Trans. Pattern Anal. Mach. Intell.,* 2008, vol. 30 (7), 1198-1211
- **SHAPIRA D. ; AVIDAN S. ; HEL-OR Y.** Multiple Histogram Matching. *Proceedings of The IEEE International Conference on Image Processing,* 2013
- **JUNDING SUN ; XIMIN ZHANG ; JIANGTAO CUI ; LIHUA ZHOU.** Image retrieval based on color distribution entropy. *Pattern Recognition Letters,* 2006